# FASCICULE DE BREVET EUROPEEN

(11) **EP 0 468 905 B1**
(45) Date de publication et mention de la délivrance du brevet: **13.03.1996**
(21) Numéro de dépôt: 91420273.4
(22) Date de dépôt: 23.07.1991
(51) Int. Cl.: G01N 27/90

(54) **Procédé et dispositif de contrôle de défauts de tubes métalliques en cours de laminage à chaud par courants de foucault**
Vorrichtung und Verfahren zur Qualitätskontrolle von Metallrohren während des Heisswalzens durch Wirbelstrom
Method and device for eddy-current testing of metal tubes during hot-rolling

(30) Priorité: 25.07.1990 FR 9009721
(43) Date de publication de la demande: 29.01.1992
(73) Titulaire: VALLOUREC INDUSTRIES, F-92100 Boulogne-Billancourt (FR); SOFRATEST, F-78630 Orgeval (FR)
(72) Inventeur: Audenard, Bernard, F-78630 Orgeval (FR); Bisiaux, Bernard, F-59300 Valenciennes (FR); Quinaud, Michel, F-60460 Prece-sur-Oise (FR); Desmoulin Gérard, FR-59990 Saultain (FR); Eymard Duvernay, Jacques, FR-59990 Saultain (FR)
(74) Mandataire: Desolneux, Jean-Paul Charles

(56) Documents cités:
- EP-A- 0 115 735
- EP-A- 0 177 626
- GB-A- 991 890
- GB-A- 2 161 938

## Description

Le procédé et le dispositif qui font l'objet de l'invention concernent la détection de défauts de tubes métalliques, en cours de laminage à chaud, par courant de Foucault.

On connaît des moyens de contrôle de défauts par courants de Foucault concernant des barres, des fils ou des tubes en métaux ou alliages amagnétiques, c'est-à-dire non ferromagnétiques, le plus souvent en acier inoxydable, fonctionnant à température voisine de l'ambiante. Ces moyens comprennent, par exemple, une bobine émettrice alimentée en courant haute fréquence qui crée un champ magnétique alternatif dans le métal à contrôler. Ce champ alternatif engendre à son tour des courants de Foucault avec lesquels interagissent les défauts éventuellement présents, sous forme de discontinuités, dans le métal ou alliage à contrôler. On détecte ces interactions au moyen d'au moins une bobine réceptrice convenablement placée. Cette bobine réceptrice est reliée à des moyens de mesure permettant de détecter, lors du mouvement relatif bobine-produit, ses variations d'indépendance au passage des défauts et de mesurer l'amplitude de ces variations qui est liée aux dimensions, à la forme, de ces défauts et à leur orientation par rapport aux courants de Foucault.

Le brevet GB 991890 décrit un dispositif permettant de contrôler par courants de Foucault des tubes ou des barres à température ambiante ayant, par exemple, un diamètre de l'ordre de 1/8 inch (3,175mm).

Ce dispositif comporte deux capteurs sandwich comportant chacun un enroulement émetteur et deux enroulements détecteurs placés de part et d'autre de l'émetteur et connectés en assistance de phase. On peut aussi inverser les rôles respectifs des enroulements. Le ou les enroulements détecteurs du premier capteur sont montés en opposition vis-à-vis de celui ou de ceux du deuxième capteur. Chacun de ces enroulements comporte, de préférence, une seule spire et peut être un disque par exemple en cuivre, de, par exemple 0,002 à 0,005 inch (0,05 à 0,127 mm) d'épaisseur.

Le disque est percé d'un trou permettant le passage avec un faible jeu du tube ou du rond à tester et comporte une fente radiale ainsi que deux prolongements pour les liaisons électriques. Des disques en métal ferromagnétique séparent les enroulements afin de confiner le champ magnétique. L'isolation et le collage des disques les uns aux autres sont assurés par des feuilles de papier imprégnés d'araldite. Il est ainsi possible de localiser le flux sur une zone étroite de l'échantillon à tester. Le montage en opposition permet de déduire du signal de défaut émis par un capteur le bruit de fond détecté par l'autre. Aucun support n'est nécessaire, la rigidité des capteurs du type sandwich est suffisante. On limite le jeu radial entre la surface du tube ou de la barre et le bord intérieur des offices des disques à environ 0,012 inch (0,3 mm).

La demande de brevet européen n° 0115735 décrit un dispositif de détection de criques de surface par courants de Foucault utilisé au défilé sur des brames en acier coulées en continu et refroidies entre 300 et 600° C. On utilise plusieurs capteurs localisés comportant chacun une seule bobine émettrice - détectrice d'axe perpendiculaire à la surface de la brame. Chaque bobine est logée dans une enveloppe métallique avec un jeu suffisant pour permettre un refroidissement par circulation d'eau, les enroulements de la bobine étant noyés dans de la résine. Ces capteurs sont montés sur des bâtis mobiles munis de roulettes et poussés par des piston permettant de les appuyer contre la brame qui défile en suivant ses ondulations. Ainsi la bobine de chaque capteur reste à une distance d'environ 4 à 5 mm de la surface de la brame.

Les courants de Foucault peuvent permettre aussi de contrôler les cordons de soudure de tube soudés, réalisés en un métal amagnétique tel qu'un acier inoxydable.

Des contrôles en continu de cordon de soudure de tubes en acier ferritique, portés à température supérieure au point de Curie, ont aussi été effectués au défilé. Ils ont permis de détecter des défauts localisés, relativement importants dans ces cordons de soudure.

De façon générale, l'expérience a montré que le contrôle de défauts, par courants de Foucault, au défilé, présente de sérieuses difficultés de mise en oeuvre dès qu'il s'agit de produits métallurgiques chauds. La nécessité de protéger les moyens de création de ces courants de Foucault et les moyens de détection de leurs interactions avec les défauts, rend très difficile leur mise en place au voisinage immédiat des produits à contrôler. De plus, la sensibilité de la méthode de mesure est faible car les défauts avec lesquels interagissent les courants de Foucault n'entraînent qu'une faible variation d'impédance au niveau de la bobine de mesure. Par ailleurs, dès lors qu'il s'agit d'envisager de contrôler des produits défilant à vitesse relativement grande devant un capteur, se pose le problème du repérage des défauts le long du produit en circulation surtout si celui-ci est à température différente de l'ambiante.

Enfin, dans bien des cas, les défauts détectés, grâce à une très faible variation d'impédance d'une bobine, se détachent à peine du bruit de fond. Souvent ces soit-disant défauts correspondent simplement à une irrégularité de surface du produit en déplacement, ou à une variation de sa distance transversale par rapport à la bobine détectrice ou à toute autre cause fortuite.

On a recherché plus particulièrement la possibilité de détecter par courants de Foucault des défauts sur des tubes métalliques dont l'amplitude de la réponse des défauts ne dépasse que faiblement le bruit de fond et ceci pour des vitesses de défilement supérieures à 1 m/s et pouvant atteindre et même dépasser 15 à 20 m/s. On a recherché aussi la possibilité de réduire au minimum la distance entre les moyens de détection des défauts et la paroi de tubes en cours de laminage à chaud à l'état amagnétique afin d'obtenir un maximum de sensibilité.

On a recherché aussi la possibilité de vérifier à chaque instant l'existence des défauts détectés en un point quelconque du tube, de comparer leur amplitude avec des étalons et d'étudier leur variation éventuelle en fonction du travail à chaud du tube à travers un laminoir, multi-cages, particulièrement un laminoir réducteur-tireur.

On a recherché enfin la possibilité d'appliquer le procédé de détection de défauts par courants de Foucault à des tubes en acier au carbone en cours de laminage à chaud à température supérieure au point de Curie.

Le procédé et le dispositif qui font l'objet de l'invention permettent de résoudre les problèmes ainsi posés dans leur ensemble.

De façon tout à fait générale, ce procédé et ce dispositif s'appliquent à la détection au défilé, suivant un axe, le tube pouvant tourner ou non, de défauts sur la paroi d'un tube métallique sans soudure, en cours de laminage à chaud à l'état amagnétique.

Le procédé s'applique en particulier au contrôle de tubes en aciers ferromagnétiques en cours de laminage à chaud à température supérieure au point de Curie c'est-à-dire à l'état amagnétique.

Suivant l'invention, on met en oeuvre deux capteurs comportant chacun une bobine émettrice alimentée en courant alternatif à fréquence élevée et deux bobines réceptrices en opposition, les enroulements de ces trois bobines étant traversés par le tube, ces deux capteurs étant disposés à une distance déterminée l'un de l'autre le long de l'axe de laminage. Dans ces conditions, on observe, au cours du passage successif d'un même défaut à travers les deux capteurs, des variations d'impédance ou de tout paramètre lié à l'impédance tel que par exemple l'intensité ou la tension des deux bobines réceptrices de chaque capteur qui sont détectées et traitées par des moyens électroniques appropriés de façon à vérifier, au passage à travers le deuxième capteur, l'existence de chaque défaut détecté au passage à travers le premier.

Suivant les conditions de mise en oeuvre du procédé, les deux capteurs peuvent être équipés de bobines identiques alimentées par des courants alternatifs de fréquence identique ou différente ; ils peuvent aussi comporter des bobines émettrices et/ou réceptrices de caractéristiques différentes alimentées par des courants alternatifs de fréquence identique ou différente. C'est en particulier le cas lorsque les deux capteurs sont séparés l'un de l'autre par au moins une cage d'un laminoir réducteur-tireur multi-cages ; le capteur situé en aval de cette cage peut alors comporter des bobines dont le diamètre intérieur est différent de celui des bobines du capteur amont afin de suivre les variations du diamètre extérieur du tube.

Suivant le procédé, on peut aussi utiliser des bobines émettrices et/ou réceptrices différentes sur les deux capteurs, même s'il n'y a pas de cage de laminoir entre eux. Cette utilisation permet d'obtenir des réponses différentes à l'interaction entre un même défaut et les courants de Foucault ; ces réponses différentes permettent alors de mieux définir les caractéristiques du défaut. Le courant alternatif utilisé pour alimenter les bobines émettrices a, de préférence, une fréquence comprise entre 1 et 50 KHz. Cette fréquence est notamment liée à la vitesse de défilement du tube.

De préférence, on établit une liaison électrique entre l'une des bobines réceptrices de chaque capteur et des moyens électroniques de détection et de traitement mis en oeuvre, afin de repérer l'instant auquel l'extrémité avant du tube s'engage dans chaque capteur. Le signal ainsi reçu présente une très grande amplitude qui permet sa détection en absolu.

Ces signaux combinés avec le signal d'entrée du tube dans le laminoir permettent de contrôler de manière sûre la totalité effective du tube. Ces signaux combinés avec la connaissance des vitesses de passage du produit permettent de déterminer outre la position absolue sur le tube pour chaque défaut identifié à l'instant de son passage à travers les bobines réceptrices du premier capteur, l'instant auquel le même défaut traversera le deuxième capteur et délivrera un signal correspondant. Le procédé permet ainsi de vérifier, au passage à travers le deuxième capteur, l'existence d'un défaut détecté au passage à travers le premier, ainsi que, éventuellement, son évolution.

De même que la mesure en absolu de l'impédance d'une des deux bobines réceptrices de chaque capteur permet de détecter l'engagement de l'extrémité avant d'un tube, le même moyen permet avantageusement de détecter les instants de sortie de l'extrémité arrière de ce même tube de chaque capteur.

Avantageusement, le repérage des extrémités avant et arrière de chaque tube permet aux moyens électroniques de détection et de traitement de ne pas prendre en compte les défauts détectés sur des longueurs prédéterminées des zones d'extrémité avant et arrière du tube.

De préférence, les moyens électroniques de détection et de traitement permettent de digitaliser et de mémoriser l'amplitude, la phase et la position de chaque défaut détecté.

Avantageusement, ces moyens permettent aussi de détecter, digitaliser et mémoriser des défauts étalons, réalisés dans des tubes d'étalonnage et d'en comparer l'amplitude avec celle des défauts détectés sur les autres tubes, ainsi que le bruit de fond des autres tubes et le bruit de fond moyen.

De préférence, la détection des défauts est effectuée sur des tubes défilant à une vitesse comprise entre 1 et 20 m/s. Les diamètres extérieurs de ces tubes sont, le plus souvent, compris entre 20 et 170 mm.

L'invention concerne également un dispositif pour la mise en oeuvre du procédé. Ce dispositif comprend deux capteurs munis chacun de trois bobines dont l'axe correspond à l'axe de défilement du tube. Dans chaque capteur, une bobine extérieure émettrice est reliée à une source de courant alternatif à fréquence élevée. Deux bobines réceptrices sont logées côte à côté à l'intérieur de cette bobine émettrice; ces deux bobines sont reliées électriquement l'une à l'autre, en opposition par l'une de leurs extrémités ; des liaisons électriques avec des moyens électroniques de détection et de traitement permettent de mesurer la variation d'impédance de l'ensemble de ces deux bobines en opposition ou la conséquence de cette variation d'impédance, ceci chaque fois qu'il se produit une interaction entre les courants de Foucault, engendrés par la bobine émettrice dans le tube et un défaut de celui-ci. Des moyens de refroidissement permettent de maintenir les bobines à température pas supérieure à 50° C, et la distance radiale entre la paroi intérieure des enroulements des deux bobines réceptrices et la paroi extérieure du tube n'est pas de préférence sensiblement supérieure à 11mm. De préférence également, la largeur de chaque bobine réceptrice n'est pas supérieure à environ la moitié de son diamètre intérieur et la largeur de la bobine émettrice n'est pas sensiblement supérieure à la largeur totale de l'espace occupé par les deux bobines réceptrices.

De préférence, les bobines de chaque capteur sont montées sur un support en matière plastique, logé dans une enveloppe métallique, un passage entre ce support et cette enveloppe étant ménagé pour permettre la circulation de l'eau de refroidissement.

De préférence, la somme des largeurs radiales du support des deux bobines, du passage d'eau de refroidissement et de la paroi métallique de l'enveloppe, dans la zone comprise entre la paroi intérieure des enroulements des bobines réceptrices et la paroi extérieure du tube, n'est pas supérieure à 4mm.

La paroi métallique de l'enveloppe, dans la zone comprise entre la paroi intérieure des enroulements des bobines réceptrices et la paroi extérieure du tube, est obligatoirement en un matériau amagnétique à la température ambiante. On peut par exemple utiliser l'acier inoxydable austénitique ou encore mieux par exemple un matériau amagnétique isolant thermiquement comme une céramique.

L'exemple et les figures ci-après décrivent, de façon non limitatrice, un mode de mise en oeuvre du procédé suivant l'invention et un mode de réalisation du dispositif suivant l'invention.

La figure 1 est un schéma d'un mode de mise en oeuvre du procédé suivant l'invention dans lequel un tube en cours de laminage est contrôlé par deux capteurs à courants de Foucault disposés de part et d'autre d'une cage d'un laminoir multi-cages réducteur-tireur à chaud.

La figure 2 est une vue en demi-coupe d'un mode de réalisation d'un capteur tel que ceux de la figure 1.

La figure 3 est une vue latérale en coupe d'un mode particulier de montage d'un capteur tel que celui de la figure 2 dans un porte-capteur à la sortie d'une cage de laminoir multi-cages réducteur-tireur à chaud.

La figure 4 est une vue schématique dans l'axe de laminage du porte-capteur de la figure 3.

La figure 5 est un schéma électrique montrant les liaisons électriques entre les bobines des capteurs mis en oeuvre dans le procédé suivant l'invention et les moyens de détection et de traitement des défauts.

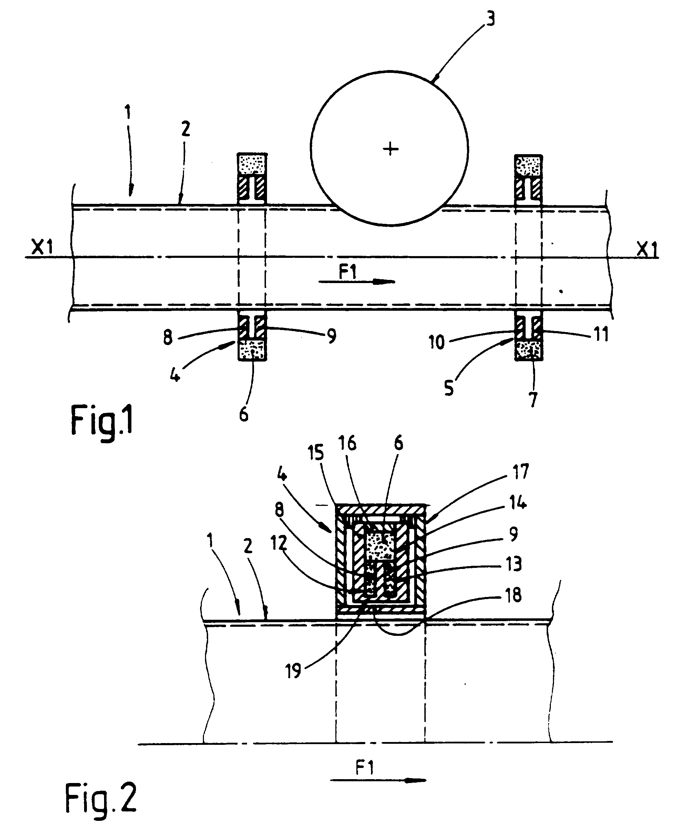

La figure 1 est une vue purement schématique d'un mode de mise en oeuvre du procédé suivant l'invention. L'axe X1-X1 est l'axe de défilement d'un tube métallique 1 dont la paroi extérieure 2 est représentée en traits pleins. Ce tube est en cours de laminage à travers un laminoir réducteur-tireur à chaud, multi-cages dont seul un cylindre 3, est représenté. Ce cylindre 3 est l'un des 3 cylindres, d'une cage non représentée, répartis à 120° les uns des autres autour de l'axe X1-X1. Le taux de réduction de section au niveau de cette cage étant relativement faible, les 2 capteurs 4 et 5 dont seules les bobines sont représentées en coupe dans le plan de la figure, sont de mêmes dimensions. Chacun d'eux comporte une bobine émettrice 6, 7 extérieure, alimentée en courant à haute fréquence qui crée un champ alternatif qui traverse la paroi 2 du tube 1. Ce tube 1 en acier au carbone traverse le laminoir dans le sens de la flèche F1 à une température de 950° +/- 50° C, bien supérieure au point de Curie. Il est donc à l'état amagnétique. Le champ alternatif créé par chacune des bobines émettrices 6, 7 engendre dans la paroi 2 du tube 1 au niveau de ces bobines des courants de Foucault. Les interactions de ces courants de Foucault avec les défauts de tous types qui se traduisent par des discontinuités dans la paroi 2, ont pour effet de dévier ces courants au passage de ces défauts à l'intérieur des capteurs 4, 5. Il en résulte des variations de l'impédance des bobines réceptrices 8, 9 et 10, 11 qui correspondent à ces capteurs.

Afin d'obtenir un maximum de sensibilité de ces bobines réceptrices, celles-ci sont placées le plus près possible de la paroi 2 du tube 1 tout en tenant compte de la nécessité d'un refroidissement efficace et aussi des légères déviations possibles du tube 1 par rapport à l'axe X1-X1.

La figure 2 est une vue en demi-coupe d'un mode de protection des capteurs tels que le capteur 4 de la figure 1 conformément au dispositif suivant l'invention.

Les enroulements des trois bobines 6, 8, 9 sont logés dans des encoches annulaires 12, 13, 14 réalisées dans une pièce en matière isolante 15. Cette pièce est par exemple en une matière plastique telle qu'un polyamide. Les deux encoches 12, 13 profondes et étroites, les plus proches de l'axe de défilement X1-X1 du tube 1 suivant la flèche F1, contiennent les deux bobines réceptrices 8, 9 et l'encoche 14 la plus éloignée et la plus large contient la bobine émettrice 6. Chacune de ces bobines contient un fil conducteur, par exemple en cuivre émaillé, enroulé dans l'encoche autour de l'axe X1-X1.

Les deux encoches 12, 13 ont, par exemple, 2 mm de large suivant l'axe X1-X1 et environ 10 mm de profondeur radiale. Chacune d'elles peut contenir plusieurs centaines de spires d'un fil ayant un diamètre de l'ordre de 0,1 à 0,3 mm. L'encoche 14 contenant la bobine émettrice 6 est la plus éloignée de l'axe. Cette bobine 6 comporte aussi plusieurs centaines de spires. Un couvercle 16 également en matière plastique ferme l'ensemble des trois encoches 12, 13, et 14.

On protège la pièce 15 et les trois bobines qu'elle contient contre le rayonnement intense de la paroi 2 du tube 1 au moyen d'une circulation d'eau très rapide.

Cette eau circule dans une enveloppe métallique 17 qui entoure la pièce 15 tout en laissant un passage étroit pour l'eau de refroidissement. Au moins la paroi mince 18 de l'enveloppe 17 qui est en regard de la paroi 2 est en un métal non ferromagnétique tel que, par exemple, un acier inoxydable 18-10. Le reste de l'enveloppe 17 peut être en acier ordinaire. La circulation d'eau est particulièrement efficace au niveau de la paroi 18, en 19.

Pour améliorer la sensibilité on réduit le plus possible la distance radiale entre la paroi 2 du tube 1 et les bobines réceptrices des capteurs. Pour cela l'épaisseur de la paroi mince 18 de l'enveloppe 17, celle du passage d'eau de refroidissement 19 et celle de la pièce annulaire 15 au fond des encoches 12 et 13 sont réduites au minimum. Dans la pratique, chacune de ces épaisseurs est de l'ordre de 1 mm ou peu supérieure, et de préférence, ne dépasse pas sensiblement au total quatre millimètres.

La distance radiale entre la paroi extérieure 2 du tube 1 et la surface en regard de la paroi mince 18 ne dépasse pas de préférence environ 7 millimètres afin de limiter à pas plus de 11 millimètres la distance radiale entre cette paroi extérieure 2 du tube 1 et la paroi intérieure des enroulements des bobines réceptrices telles que 8, 9. Le diamètre extérieur des tubes est le plus souvent d'environ 30 à 160 mm et peut au minimum descendre jusque vers 20 mm. Les arrivées et départs d'eau de refroidissement, non représentés, sont disposés de façon à assurer une circulation d'eau continue et très rapide principalement dans le passage 19 entre la paroi mince 18 et le fond des encoches 12 et 13.

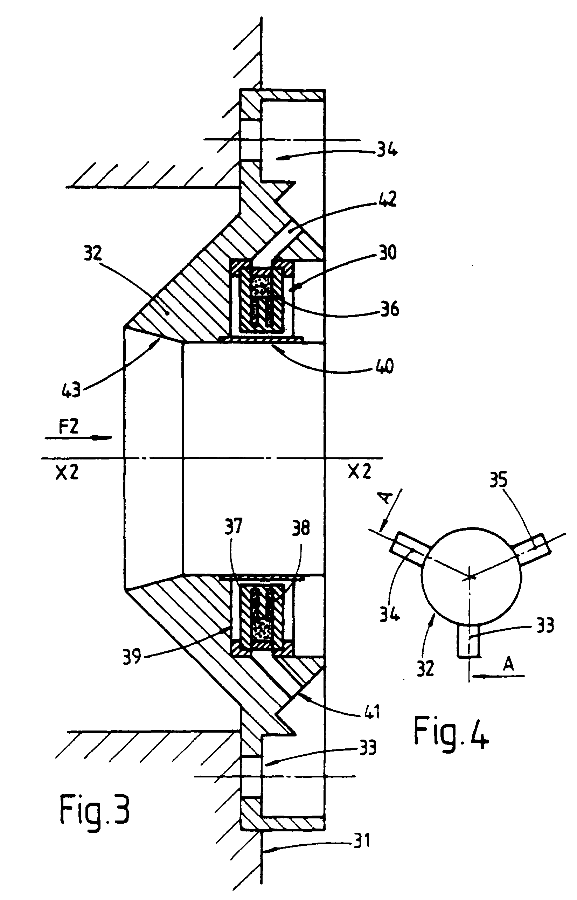

Les figures 3 et 4 montrent, de façon plus précise, un mode particulier de montage d'un capteur 30 pour la mise en oeuvre du procédé suivant l'invention.

Ce capteur 30 est monté à la sortie de l'avant-dernière cage 31 d'un laminoir à chaud réducteur-tireur multi-cage non représenté. La figure 3 est une vue en coupe dans le sens de la flèche F2 de la figure schématique 4 suivant les demi plans indiqués par les flèches A, A. Cette figure 4 indique le mode de fixation du porte-capteur 32 contenant le capteur 30 par trois pattes d'attache 33, 34, 35, à 120° les unes des autres, sur la sortie de la cage 31. Il s'agit d'une cage à 3 cylindres disposés aussi à 120° avec un décalage de 60° par rapport à ces pattes d'attache. Le capteur 30 de la figure 3 est semblable au capteur 4, 5 de la figure 1. Les bobines émettrice 36 et réceptrices 37, 38 sont disposées dans le logement annulaire 39 du porte-capteur 32 de façon analogue au mode de protection du capteur 4 représenté à la figure 2. Comme dans le cas de la figure 2, la paroi mince 40 du porte-capteur 32 est en acier inoxydable amagnétique, le reste du porte-capteur étant en acier ordinaire. Une entrée d'eau 41 sous forte pression est disposée au voisinage de la patte d'attache inférieure 33 avec des sorties d'eau correspondantes, telles que 42, au voisinage de chacune des pattes d'attache supérieures 34 et 35. Comme dans le cas de la figure 2, on réduit au minimum la distance radiale entre la paroi du tube qui défile dans le capteur 30 dans le sens de la flèche F2 suivant l'axe X2-X2 et les enroulements des bobines réceptrices 37, 38. Le porte-capteur 32 comporte une entrée tronconique 43 qui garantit la rentrée de l'extrémité avant des tubes si celle-ci est légèrement déformée. Les liaisons électriques entre les bobines 36, 37, 38 et les moyens électroniques correspondants, non représentés, sont disposées de façon à être protégées du rayonnement des tubes chauds en cours de laminage.

Un deuxième capteur, semblable au premier, non représenté, est disposé de la même façon à la sortie de la dernière cage du laminoir. Ainsi, comme dans le cas du schéma de la figure 1, les deux capteurs sont séparés par une cage de laminoir.

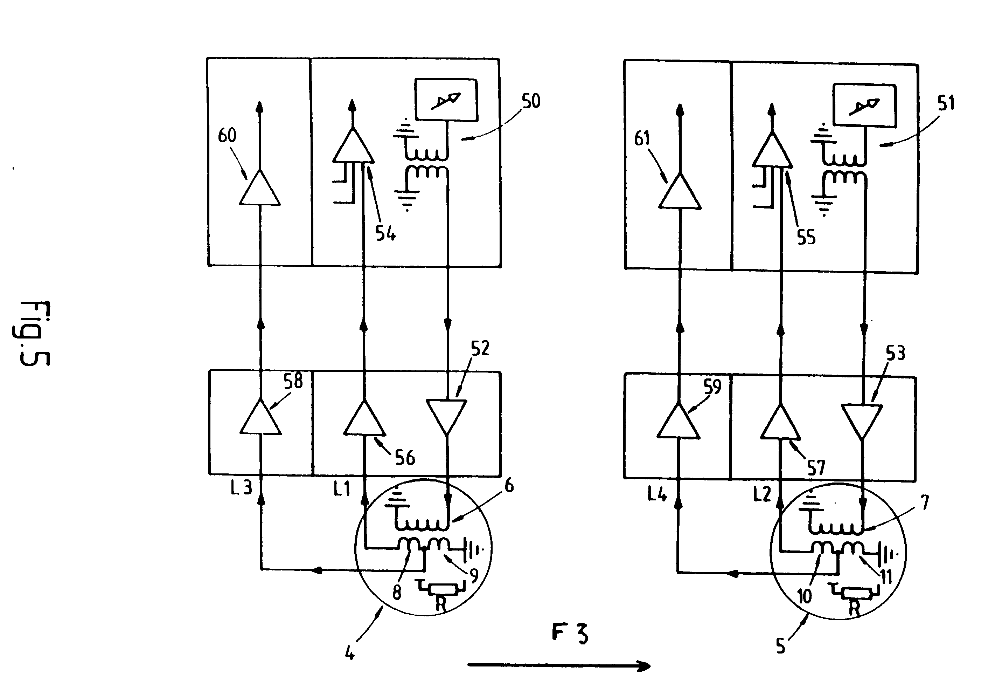

La figure 5 est un schéma électrique qui montre d'une part comment les bobines émettrices 6, 7 (voir également figures 1 et 2) sont reliées à une source de courant alternatif à fréquence élevée 50, 51 réamplifiée en 52, 53 et, d'autre part comment les bobines réceptrices 8, 9, 10, 11 (voir également figures 1 et 2) sont reliées aux moyens électroniques de détection et de traitement 54, 55 après une amplification préalable 56, 57.

Sur cette figure 5 les bobines des deux capteurs 4 et 5 sont représentées de façon séparée et purement schématique pour rendre bien visibles les particularités du montage électrique. Les deux bobines émettrices 6 et 7 sont alimentées en courant alternatif par les sources 50, 51 à une fréquence qui peut être choisie dans un intervalle de 1 à 50 KHz. La tension de crête à crête ne dépasse pas, de préférence, environ 100 volts. Les deux bobines réceptrices 8, 9 et 10, 11 de chaque capteur, sont montées en opposition comme le montre le schéma, au moyen des liaisons L1 et L2, de façon à diminuer le bruit de fond. Afin de détecter avec certitude l'instant de l'entrée de l'extrémité avant du tube 1 en cours de laminage dans chaque capteur 4, 5 l'une des deux bobines réceptrice de chacun, par exemple la bobine 9, 11 est reliée à des moyens électroniques de détection amplification 58, 59 et de traitement 60, 61 par les câbles de liaison L3, L4. L'extrémité libre de chacune des bobines réceptrices ou émettrices 9, 11, 6, 7 est reliée à la terre, T, et les mesures sont effectuées par rapport à la terre. A partir de ces mesures de variation d'impédance absolue les moyens de traitement déterminent le temps de parcours de l'extrémité amont du tube 1 entre les deux capteurs. Connaissant la vitesse de défilement du tube, il est possible aussi de ne déclencher la détection et le traitement des défauts au niveau de chaque capteur qu'après passage d'une longueur prédéterminée de tube qui est ainsi neutralisée. Le tronçon ainsi neutralisé est, par la suite, systématiquement chuté. Les mêmes moyens permettent de détecter le passage de l'extrémité arrière du tube à travers chaque capteur.

Les moyens électroniques 56, 54 et 57, 55 permettent de détecter en différentiel la variation d'impédance de l'ensemble des deux bobines réceptrices en opposition 8, 9 et 10, 11 de chaque capteur 4 et 5, d'amplifier ces signaux, de les digitaliser et de les classer en fonction de leur amplitude leur position étant connue par ailleurs. Des liaisons électriques non représentées permettent de faire correspondre les signaux reçus par le deuxième capteur 5 avec ceux reçus par le premier capteur 4 qui sont localisés en des mêmes points du tube, en tenant compte du temps de passage d'un capteur à l'autre dans le sens de la flèche F3 calculé à partir de la détection de l'instant d'entrée de l'extrémité avant du tube dans chaque capteur. On peut ainsi vérifier au niveau du deuxième capteur 5 l'existence de tout défaut initialement détecté au niveau du premier 4.

On peut aussi comparer, au niveau des deux capteurs, l'évolution de l'amplitude d'un même défaut. Cette comparaison est particulièrement intéressante lorsque le tube, entre les deux capteurs, est soumis à l'action de une ou plusieurs cages du laminoir.

Pour rendre la réponse des bobines réceptrices 8, 9, 10, 11 strictement identique pour un type de bobine donné (même géométrie et même enroulement) on associe au capteur un élément R dont la valeur peut être lue automatiquement par un système de pilotage, valeur qui traduit l'écart de sensibilité du capteur considéré par rapport au capteur étalon. Cet élément peut par exemple être une résistance ou une mémoire morte.

De très nombreuses modifications ou adaptations peuvent encore être apportées au procédé et au dispositif qui font l'objet de l'invention sans sortir du domaine de celle-ci.

## Revendications

1. Procédé de détection au défilé, suivant un axe, de défauts sur la paroi d'un tube métallique sans soudure en cours de laminage à chaud, à l'état amagnétique dans lequel on provoque la formation de courants de Foucault dans cette paroi au moyen d'un champ alternatif à fréquence élevée, les interactions entre les courants de Foucault et les défauts étant détectées par mesure de variation d'impédance ou d'un paramètre lié à la variation d'impédance (i, u) caractérisé en ce qu'on met en oeuvre deux capteurs (4, 5) comportant chacun une bobine émettrice (6, 7) alimentée en courant alternatif à fréquence élevée et deux bobines réceptrices en opposition (8, 9, 10, 11), les enroulements de ces trois bobines étant traversés par le tube (1), ces deux capteurs étant disposés à une distance déterminée l'un de l'autre le long de l'axe de laminage (X1-X1) et en ce que les variations d'impédance des bobines réceptrices ou d'un paramètre lié à la variation d'impédance qui ont lieu successivement au passage d'un même défaut à travers les deux capteurs, sont détectées et traitées par des moyens électroniques ou informatiques appropriés de façon à vérifier, au passage à travers le deuxième capteur (5) l'existence et l'évolution de chaque défaut détecté au passage à travers le premier capteur (4)

2. Procédé suivant revendication 1 caractérisé en ce que les moyens électroniques de détection et de traitement permettent de comparer les amplitudes des signaux reçus par les deux capteurs (4, 5) pour chaque défaut détecté.

3. Procédé suivant revendication 1 ou 2 caractérisé en ce que les deux capteurs sont identiques.

4. Procédé suivant revendication 1 ou 2 caractérisé en ce qu'au moins les bobines réceptrices du deuxième capteur sont différentes de celles du premier capteur.

5. Procédé suivant l'une des revendications 1 à 4 caractérisé en ce qu'au moins l'un des deux capteurs (5) est placé en aval de la dernière cage d'un laminoir multi-cages.

6. Procédé suivant l'une des revendications 1 à 5 caractérisé en ce qu'au moins l'un des deux capteurs (4) est placé en amont d'une cage d'un laminoir multi-cages.

7. Procédé suivant l'une des revendications 1 à 6 caractérisé en ce que le laminage à chaud est effectué au moyen d'un laminoir réducteur ou réducteur tireur.

8. Procédé suivant l'une des revendications 1 à 7 caractérisé en ce que les deux capteurs (4, 5) sont séparés l'un de l'autre par au moins une cage d'un laminoir multi-cages.

9. Procédé suivant l'une des revendications 1 à 8 caractérisé en ce qu'une liaison électrique entre l'une des bobines réceptrices de chaque capteur et des moyens électroniques de détection et de traitement permet de détecter la variation absolue d'impédance de cette bobine aux instants auxquels l'extrémité avant d'un tube s'engage successivement dans chaque capteur et de déterminer l'intervalle de temps qui s'écoule entre ces deux engagements successifs.

10. Procédé suivant revendication 9 caractérisé en ce que la même liaison électrique entre une bobine réceptrice de chaque capteur et des moyens électroniques de détection et de traitement permet de détecter la variation absolue d'impédance de cette bobine à l'instant auquel l'extrémité arrière du tube sort de chaque capteur.

11. Procédé suivant revendication 9 ou 10 caractérisé en ce que, grâce au repérage de l'extrémité avant ou arrière du tube, on peut ne pas prendre en compte les défauts détectés par les moyens électroniques sur une longueur prédéterminée de la zone d'extrémité amont ou aval.

12. Procédé suivant l'une des revendications 1 à 11 caractérisé en ce que les moyens électroniques de détection et de traitement permettent de digitaliser et de mémoriser l'amplitude de chaque défaut détecté.

13. Procédé suivant revendication 12 caractérisé en ce que les moyens électroniques de détection et de traitement permettent de détecter, digitaliser et mémoriser des défauts étalons, réalisés dans des tubes d'étalonnage et de comparer l'amplitude des défauts détectés dans les autres tubes avec celle des défauts étalons en mémoire.

14. Procédé suivant l'une des revendications 1 à 13 caractérisé en ce que la fréquence du courant alternatif qui alimente la bobine émettrice de chaque capteur est comprise entre 1 et 50 Khz.

15. Procédé suivant l'une des revendications 1 à 14 caractérisé en ce que la vitesse de défilement des tubes est comprise entre 2 et 20m/s.

16. Procédé suivant l'une des revendications 1 à 15 caractérisé en ce que le diamètre des tubes dont on détecte les défauts est compris entre 20 et 170 mm.

17. Dispositif permettant de détecter au défilé, suivant un axe, des défauts sur la paroi d'un tube métallique sans soudure dont on effectue le laminage à chaud à l'état amagnétique, ce dispositif comportant des moyens de création de courants de Foucault dans la paroi du tube ainsi que des moyens de détection des interactions de ces courants de Foucault avec les défauts du tube caractérisé en ce qu'il comporte deux capteurs (4, 5), disposés à une distance déterminée l'un de l'autre le long de l'axe de laminage, chacun de ces capteurs comportant trois bobines à travers lesquelles passe le tube, l'une de ces bobines (6, 7) étant alimentée en courant alternatif à fréquence élevée pour créer les courants de Foucault, les deux autres bobines (8, 9, 10, 11) étant montées en opposition et reliées électriquement à des moyens électroniques de détection et de traitement permettant de mesurer la variation d'impédance ou de tout paramètre lié à l'impédance de l'ensemble de ces deux bobines en opposition chaque fois qu'il se produit une interaction entre les courants de Foucault et au moins un défaut, des moyens de refroidissement (19, 41, 42) permettant de maintenir les bobines à température pas supérieure à 50°C et la distance radiale entre la paroi intérieure des enroulements des deux bobines réceptrices en opposition et la paroi extérieure 2 du tube 1 n'étant pas sensiblement supérieure à 11 mm.

18. Dispositif suivant la revendication 17 caractérisé en ce que les bobines (6, 8, 9) de chaque capteur (4) sont montées sur un support en matière plastique (15), logé dans une enveloppe métallique (17), un passage (19) entre ce support et cette enveloppe étant ménagé pour permettre la circulation d'un courant d'eau de refroidissement.

19. Dispositif suivant revendication 18 caractérisé en ce que la somme des largeurs radiales du support des deux bobines, du passage d'eau de refroidissement et de la paroi métallique de l'enveloppe, dans la zone comprise entre la paroi intérieure des enroulements des bobines réceptrices et la paroi extérieure du tube, n'est pas supérieure à 4 mm.

20. Dispositif suivant l'une des revendications 17 à 19 caractérisé en ce que la paroi métallique de l'enveloppe (17), dans la zone (18) comprise entre la paroi intérieure des enroulements des bobines réceptrices et la paroi intérieure du tube est réalisée en un matériau amagnétique à température ambiante tel que par exemple un acier inoxydable amagnétique à température ambiante.

21. Capteur pour mise en oeuvre d'une mesure par courants de Foucault caractérisé en ce qu'il comporte trois bobines (6, 8, 9) l'une de ces bobines (6) étant émettrice et destinée à être alimentée en courant alternatif à fréquence élevée, les deux autres bobines (8, 9) étant réceptrices et montées en opposition, ces trois bobines étant logées dans les encoches annulaires (12, 13, 14) d'un support (15) en matière isolante lui-même contenu dans une enveloppe métallique (17) permettant le passage d'un courant d'eau, un espace (19) étant aménagé pour le passage de l'eau entre la partie de l'enveloppe (18) située au droit des bobines réceptrices (8, 9) et le support (15) des bobines, ladite partie de l'enveloppe située au droit des bobines réceptrices étant réalisée en un matériau amagnétique, l'encoche annulaire (14) contenant la bobine émettrice (6) entourant les deux encoches annulaires (12, 13) contenant les deux bobines réceptrices (8,9), la largeur totale occupée par les bobines réceptrices (8, 9) dans le support (15) étant sensiblement la même que la largeur occupée dans ce support (15) par la bobine émettrice (6), un couvercle (16) fermant l'ensemble des trois encoches.

## Patentansprüche

1. Verfahren zur Erfassung von Fehlern auf der Wand eines nahtlosen Metallrohres im Lauf des Heißwalzens im Durchlauf längs einer Achse im unmagnetischen Zustand, bei dem man die Bildung von Foucault-Strömen mittels eines Wechselfeldes hoher Frequenz in dieser Wand erzeugt, wobei die Wechselwirkungen zwischen den Foucault-Strömen und den Fehlern durch Messung einer Impedanzänderung oder eines mit der Impedanzänderung verknüpften Parameters (i, u) erfaßt werden,
dadurch **gekennzeichnet,** daß
man zwei Meßfühler (4, 5) einsetzt, deren jeder eine mit Wechselstrom hoher Frequenz gespeiste Senderspule (6, 7) und zwei einander zugewandte Empfangsspulen (8, 9, 10, 11) aufweist, wobei die Wicklungen dieser drei Spulen vom Rohr (1) durchsetzt werden und diese beiden Meßfühler in einem bestimmten gegenseitigen Abstand längs der Walzachse (XI-XI) angeordnet sind, und daß die Änderungen der Impedanz der Empfangsspulen oder eines mit der Impedanzänderung verknüpften Parameters, die nacheinander beim Durchlauf desselben Fehlers durch die beiden Meßfühler auftreten, erfaßt und durch elektronische oder informatische Mittel verarbeitet werden, die derart geeignet sind, beim Durchlauf durch den zweiten Meßfühler (5) die Existenz und die Entwicklung jedes beim Durchlauf durch den ersten Meßfühler (4) erfaßten Fehlers zu überprüfen.

2. Verfahren nach Anspruch 1,
dadurch gekennzeichnet, daß
die elektronischen Erfassungs- und Behandlungsmittel ermöglichen, die Amplituden der von den beiden Meßfühlern (4, 5) empfangenen Signale für jeden erfaßten Fehler zu vergleichen.

3. Verfahren nach Anspruch 1 oder 2,
dadurch gekennzeichnet, daß
die beiden Meßfühler identisch sind.

4. Verfahren nach Anspruch 1 oder 2,
dadurch gekennzeichnet, daß
wenigstens die Empfangsspulen des zweiten Meßfühlers von denen des ersten Meßfühlers verschieden sind.

5. Verfahren nach einem der Ansprüche 1 bis 4,
dadurch gekennzeichnet, daß
wenigstens einer der beiden Meßfühler (5) stromab des letzten Gerüstes eines Vielgerüst-Walzwerks angeordnet ist.

6. Verfahren nach einem der Ansprüche 1 bis 5,
dadurch gekennzeichnet, daß
wenigstens einer der beiden Meßfühler (4) stromauf eines Gerüstes eines Vielgerüst-Walzwerks angeordnet ist.

7. Verfahren nach einem der Ansprüche 1 bis 6,
dadurch gekennzeichnet, daß
das Heißwalzen mittels eines Reduzier- oder Reduzier-Zieh-Walzwerks durchgeführt wird.

8. Vorrichtung nach einem der Ansprüche 1 bis 7,
dadurch gekennzeichnet, daß
die beiden Meßfühler (4, 5) voneinander durch wenigstens ein Gerüst eines Vielgerüst-Walzwerks getrennt sind.

9. Verfahren nach einem der Ansprüche 1 bis 8,
dadurch gekennzeichnet, daß
eine elektrische Verbindung zwischen einer der Empfangsspulen jedes Meßfühlers und den elektronischen Erfassungs- und Behandlungsmitteln ermöglicht, die absolute Impedanzänderung dieser Spule in den Augenblicken zu erfassen, in denen das Vorderende eines Rohres nacheinander in jeden Meßfühler eingreift, und das Zeitintervall zu bestimmen, das zwischen diesen beiden aufeinanderfolgenden Eingriffen verstreicht.

10. Verfahren nach Anspruch 9,
dadurch gekennzeichnet, daß
die gleiche elektrische Verbindung zwischen einer Empfangsspule jedes Meßfühlers und den elektronischen Erfassungs- und Behandlungsmitteln ermöglicht, die absolute Impedanzänderung dieser Spule in dem Augenblick zu erfassen, in dem das hintere Ende des Rohres aus jedem Meßfühler austritt.

11. Verfahren nach Anspruch 9 oder 10,
dadurch gekennzeichnet, daß
man dank der Bestimmung des Vorder- oder Hinterendes des Rohres die Fehler nicht in Betracht ziehen kann, die durch die elektronischen Mittel auf einer vorbestimmten Länge der Vorder- oder Hinterendzone erfaßt werden.

12. Verfahren nach einem der Ansprüche 1 bis 11,
dadurch gekennzeichnet, daß
die elektronischen Erfassungs- und Behandlungsmittel ermöglichen, die Amplitude jedes erfaßten Fehlers zu digitalisieren und zu speichern.

13. Verfahren nach Anspruch 12,
dadurch gekennzeichnet, daß
die elektronischen Erfassungs- und Behandlungsmittel ermöglichen, Eichfehler zu erfassen, zu digitalisieren und zu speichern, die in Eichrohren vorliegen, und die Amplitude der in den anderen Rohren erfaßten Fehler mit der der Eichfehler im Speicher zu vergleichen.

14. Verfahren nach einem der Ansprüche 1 bis 13,
dadurch gekennzeichnet, daß
die frequenz des Wechselstroms, der die Senderspule jedes Meßfühlers speist, im Bereich von 1 bis 50 kHz liegt.

15. Verfahren nach einem der Ansprüche 1 bis 14,
dadurch gekennzeichnet, daß
die Durchlaufgeschwindigkeit der Rohre im Bereich von 2 bis 20 m/s liegt.

16. Verfahren nach einem der Ansprüche 1 bis 15,
dadurch gekennzeichnet, daß
der Durchmesser der Rohre, deren Fehler man erfaßt, im Bereich von 20 bis 170 mm liegt.

17. Vorrichtung, die die Erfassung der Fehler auf der Wand eines nahtlosen Metallrohres im Lauf des Heißwalzens im Durchlauf längs einer Achse im unmagnetischen Zustand ermöglicht, welche Vorrichtung Mittel zur Erzeugung von Foucault-Strömen in der Wand des Rohres sowie Mittel zur Erfassung der Wechselwirkungen dieser Foucault-Ströme mit den Fehlern des Rohres aufweist,
dadurch gekennzeichnet, daß
sie zwei Meßfühler (4, 5) aufweist, die in einem bestimmten gegenseitigen Abstand längs der Walzachse angeordnet sind, wobei jeder dieser Meßfühler drei Spulen aufweist, durch die das Rohr tritt, eine dieser Spulen (6, 7) mit Wechselstrom hoher Frequenz gespeist wird, um die Foucault-Ströme zu erzeugen, die beiden anderen Spulen (8, 9, 10, 11) einander zugewandt montiert und elektrisch mit elektronischen Mitteln zur Erfassung und Behandlung verbunden sind, die eine Messung der Änderung der Impedanz oder jedes mit der Impedanz der Gesamtheit dieser beiden einander zugewandten Spulen jedesmal ermöglichen, wenn eine Wechselwirkung zwischen den Foucault-Strömen und wenigstens einem Fehler auftritt, wobei Kühlmittel (19, 41, 42) ermöglichen, die Spulen auf einer Temperatur von nicht über 50 °C und den Radialabstand zwischen der Innenwand der Wicklungen der beiden einander zugewandten Empfangsspulen und der Außenwand (2) des Rohres (1) im wesentlichen nicht über 11 mm zu halten.

18. Vorrichtung nach dem Anspruch 17,
dadurch gekennzeichnet, daß
die Spulen (6, 8, 9) jedes Meßfühlers (4) auf einem Träger aus Kunststoff (15) montiert sind, der in einer Metallhülle (17) angebracht ist, wobei ein Kanal (19) zwischen diesem Träger und dieser Hülle vorgesehen ist, um die Zirkulation eines Kühlwasserstroms zu ermöglichen.

19. Vorrichtung nach Anspruch 18,
dadurch gekennzeichnet, daß
die Summe der Radialbreiten des Trägers der zwei Spulen, des Kühlwasserkanals und der Metallwand der Hülle in der Zone zwischen der Innenwand der Wicklungen der Empfangsspulen und der Außenwand des Rohres nicht über 4 mm ist.

20. Vorrichtung nach einem der Ansprüche 17 bis 19,
dadurch gekennzeichnet, daß
die Metallwand der Hülle (17) in der Zone (18) zwischen der Innenwand der Wicklungen der Empfangsspulen und der Innenwand des Rohres aus einem bei Umgebungstemperatur unmagnetischen Material, wie z.B. einem bei Umgebungstemperatur unmagnetischen nichtrostenden Stahl besteht.

21. Meßfühler zur Durchführung einer Messung durch Foucault-Ströme,
dadurch gekennzeichnet, daß
er drei Spulen (6, 8, 9) aufweist, wobei eine dieser Spulen (6) eine Senderspule und dazu bestimmt ist, mit Wechselstrom hoher Frequenz gespeist zu werden, die beiden anderen Spulen (8, 9) Empfangsspulen und einander zugewandt montiert sind, und diese drei Spulen in den ringförmigen Ausnehmungen (12, 13, 14) eines Trägers (15) aus Isolierstoff eingesetzt sind, der selbst in einer Metallhülle (17) enthalten ist, womit der Durchstrom eines Wasserstroms ermöglicht wird, wobei ein Raum (19) zum Durchstrom des Wassers zwischen dem auf Höhe der Empfangsspulen (8, 9) liegenden Teil der Hülle (18) und dem Träger (15) der Spulen vorgesehen ist, wobei dieser Hüllenteil auf Höhe der Empfangsspulen aus einem nichtmagnetischen Material besteht, die ringförmige Ausnehmung (14), die die Senderspule (6) enthält, die beiden ringförmigen Ausnehmungen (12, 13) umgibt, die die beiden Empfangsspulen (8, 9) enthalten, die gesamte durch die Empfangsspulen (8, 9) im Träger (15) eingenommene Breite im wesentlichen die gleiche wie die im Träger (15) durch die Senderspule (6) eingenommene Breite ist, und ein Deckel (16) die Gruppe der drei Ausnehmungen verschließt.

## Claims

1. A process for detecting in a moving mode along an axis flaws on the wall of a seamless metal tube in the course of hot rolling in the non-magnetic state, wherein the formation of eddy currents in said wall is caused by means of a high-frequency alternating field, the interactions between the eddy currents and the flaws being detected by measurement of a variation in impedance or a parameter linked to the variation in impedance (i, u), characterised in that the process uses two sensors (4, 5) each comprising an emitter coil (6, 7) supplied with high-frequency alternating current and two receiver coils (8, 9, 10, 11) in opposite relationship, the tube (1) passing through the windings of those three coils, the two sensors being disposed at a given distance from each other along the rolling axis (X1-X1), and that the variations in impedance of the receiver coils or a parameter linked to the variation in impedance which successively take place as the same flaw passes through the two sensors are detected and processed by suitable electronic or data-processing means so as to verify on passing through the second sensor (5) the existence and the evolution of each flaw detected on passing through the first sensor (4).

2. A process according to claim 1 characterised in that the electronic detection and processing means permit a comparison of the amplitudes of the signals received by the two sensors (4, 5) for each flaw detected.

3. A process according to claim 1 or claim 2 characterised in that the two sensors are identical.

4. A process according to claim 1 or claim 2 characterised in that at least the receiver coils of the second sensor are different from those of the first sensor.

5. A process according to one of claims 1 to 4 characterised in that at least one of the two sensors (5) is disposed downstream of the last housing of a multi-housing rolling mill.

6. A process according to one of claims 1 to 5 characterised in that at least one of the two sensors (4) is disposed upstream of a housing of a multi-housing rolling mill.

7. A process according to one of claims 1 to 6 characterised in that the hot rolling operation is effected by means of a reducing rolling mill or a drawing reducing rolling mill.

8. A process according to one of claims 1 to 7 characterised in that the two sensors (4, 5) are separated from each other by at least one housing of a multi-housing rolling mill.

9. A process according to one of claims 1 to 8 characterised in that an electrical connection between one of the receiver coils of each sensor and electronic detection and processing means makes it possible to detect the absolute variation in impedance of that coil at the times at which the front end of a tube successively engages into each sensor and to determine the period of time which elapses between those two successive engagements.

10. A process according to claim 9 characterised in that the same electrical connection between one receiver coil of each sensor and electronic detection and processing means makes it possible to detect the absolute variation in impedance of that coil at the time at which the rear end of the tube issues from each sensor.

11. A process according to claim 9 or claim 10 characterised in that, by virtue of the identification of the front or rear end of the tube, it is possible not to take account of flaws detected by the electronic means over a predetermined length of the front or rear end zone.

12. A process according to one of claims 1 to 11 characterised in that the electronic detection and processing means permit digitisation and memorisation of the amplitude of each flaw detected.

13. A process according to claim 12 characterised in that the electronic detection and processing means make it possible to detect, digitise and memorise calibration flaws provided in calibration tubes and to compare the amplitude of the flaws detected in the other tubes with that of the calibration flaws in the memory.

14. A process according to one of claims 1 to 13 characterised in that the frequency of the alternating current which supplies the emitter coil of each sensor is between 1 and 50 kHz.

15. A process according to one of claims 1 to 14 characterised in that the speed of movement of the tubes is between 2 and 20 m/s.

16. A process according to one of claims 1 to 15 characterised in that the diameter of the tubes whose flaws are detected is between 20 and 170 mm.

17. Apparatus for detecting in a moving mode along an axis flaws on the wall of a seamless metal tube, in respect of which hot rolling is effected in the non-magnetic state, said apparatus comprising means for generating eddy currents in the wall of the tube and means for detecting the interactions of said eddy currents with the flaws of the tube characterised in that it comprises two sensors (4, 5) disposed at a given distance from each other along the rolling axis, each of said sensors comprising three coils through which the tube passes, one of said coils (6, 7) being supplied with high-frequency alternating current to generate the eddy currents, the other two coils (8, 9, 10, 11) being mounted in opposite relationship and electrically connected to electronic detection and processing means for measuring the variation in impedance or any parameter linked to the impedance of the assembly of said two coils in opposite relationship each time that an interaction occurs between the eddy currents and at least one flaw, cooling means (19, 41, 42) permitting the coils to be maintained at a temperature not higher than 50°C and the radial distance between the internal wall of the windings of the two receiver coils in opposite relationship and the external wall (2) of the tube (1) not being substantially greater than 11 mm.

18. Apparatus according to claim 17 characterised in that the coils (6, 8, 9) of each sensor (4) are mounted on a support of plastics material (15) housed in a metal casing (17), a passage (19) between said support and said casing being provided to permit the circulation of a flow of cooling water.

19. Apparatus according to claim 18 characterised in that the sum of the radial widths of the support of the two coils, the cooling water passage and the metal wall of the casing, in the zone between the internal wall of the windings of the receiver coils and the external wall of the tube, is not greater than 4 mm.

20. Apparatus according to one of claims 17 to 19 characterised in that the metal wall of the casing (17), in the zone (18) between the internal wall of the windings of the receiver coils and the internal wall of the tube, is made of a material which is non-magnetic at ambient temperature such as for example a stainless steel which is non-magnetic at ambient temperature.

21. A sensor for effecting measurement by eddy currents characterised in that it comprises three coils (6, 8, 9), one of said coils (6) being an emitter coil and intended to be supplied with high-frequency alternating current, the other two coils (8, 9) being receiver coils and mounted in opposite relationship, said three coils being accommodated in annular notches (12, 13, 14) in a support (15) of insulating material, which support is itself contained in a metal casing (17) permitting the passage of a flow of water, a space (19) being provided for the water to pass between the part of the casing (18) which is in line with the receiver coils (8, 9) and the support (15) for the coils, said part of the casing which is disposed in line with the receiver coils being made of a non-magnetic material, the annular notch (14) containing the emitter coil (6) surrounding the two annular notches (12, 13) containing the two receiver coils (8, 9), the total width occupied by the receiver coils (8, 9) in the support (15) being substantially the same as the width occupied in the support (15) by the emitter coil (6), a cover (16) closing all of the three notches.
